Europäisches Patentamt

(19) European Patent Office

Office européen des brevets

(11) Numéro de publication: **0 246 142**
**B1**

## (12) FASCICULE DE BREVET EUROPÉEN

(45) Date de publication du fascicule du brevet:
21.03.90

(21) Numéro de dépôt: 87401029.1

(22) Date de dépôt: 06.05.87

(51) Int. Cl. ⁵ : **B 29 C 47/04,** B 29 C 47/06,
B 29 C 47/56

(54) Machine d'extrusion simultanée de plusieurs matières.

(30) Priorité: 16.05.86 FR 8607035

(43) Date de publication de la demande:
19.11.87 Bulletin 87/47

(45) Mention de la délivrance du brevet:
21.03.90 Bulletin 90/12

(84) Etats contractants désignés:
AT BE CH DE ES GB GR IT LI LU NL SE

(56) Documents cité:
EP-A-0 031 742
EP-A-0 122 703
DE-A-3 010 691
DE-A-3 211 448
FR-A-932 325
FR-A-2 110 666
FR-A-2 121 565
FR-A-2 287 322
FR-A-2 350 164
US-A-2 674 007
US-A-3 884 605

PATENT ABSTRACTS OF JAPAN, vol. 7, no. 187 (M-236) 1332 , 16 août 1983; & JP-A-58 87 023 (PURAKOO K.K.) 24-05-1983

(73) Titulaire: **Figuereo, Blaise François**
**344, rue Paul Doumer**
**F-78510 TRIEL SUR SEINE (FR)**

(72) Inventeur: **Figuereo, Blaise François**
**344, rue Paul Doumer**
**F-78510 TRIEL SUR SEINE (FR)**

(74) Mandataire: **Lordonnois, Michel**
**B.P. 4**
**F-91230 Montgeron (FR)**

LIBERGRAF, STOCKHOLM 1990

**Description**

La présente invention se rapporte à une machine d'extrusion simultanée de plusieurs matières, permettant le revêtement en continu d'un insert, sous forme de profilé, ou l'extrusion en continu d'un profilé de forme complexe, au moyen de diverses matières extrudées simultanément par des boudineuses disposées en juxtaposition les unes par rapport aux autres dans un bloc faisant partie intégrante de cette machine.

Dans la technique de l'extrusion des matières thermoplastiques ou des produits élastomères, par exemple, on utilise actuellement des installations d'extrusion qui groupent plusieurs boudineuses, disposées en T ou en Y et reliées à une tête d'extrusion commune porteuse de la filière. Ces installations sont non seulement de fortes dimensions et, par là, occupent un grand espace mais sont compliquées à réaliser, aussi bien en ce qui concerne la tête d'extrusion commune, qui est lourde et complexe, qu'en ce qui concerne la filière proprement dite.

On connaît également, par le brevet DE-A-3 010 691, une machine d'extrusion simultanée de plusieurs matières, qui est constituée par plusieurs vis boudineuses, disposées en T, alimentées chacune par une trémie particulière et débitant, par un orifice respectif, dans une tête de liaison présentant une canalisation particulière pour chaque matière boudinée, cette tête de liaison alimentant une tête d'extrusion par l'intermédiaire d'un distributeur. Cette machine d'extrusion est spécifiquement adaptée pour la fabrication de feuilles plates stratifiées, constituées de plusieurs couches de matières thermoplastiques extrudées, mais elle n'est pas conçue pour la fabrication de profilés extrudés, ni de revêtements extrudés autour d'un insert.

En conséquence, la présente invention, en partant de ce genre de machine d'extrusion simultanée de plusieurs matières, s'est donné pour but de fournir une machine d'extrusion, de construction encore plus compacte et dont la tête de liaison, ainsi que le distributeur et les organes suivants, jusqu'à la tête d'extrusion, sont conçus pour permettre le passage central d'un insert, sous forme d'un profilé, à revêtir ou à garnir au moyen des diverses matières extrudées simultanément.

Selon l'invention, une telle machine d'extrusion comportant plusieurs vis boudineuses alimentées chacune à partir d'une trémie particulière et débouchant, par un orifice respectif, dans une tête de liaison présentant une canalisation particulière pour chaque matière boudinée et alimentant, par l'intermédiaire d'un anneau distributeur, une enceinte d'extrusion à veines contrôlées, connue dans la technique, cette machine étant remarquable par le fait que la tête de liaison est évidée axialement, de même que l'anneau distributeur, pour le passage d'un insert et aussi par le fait que l'enceinte d'extrusion porte, à sa sortie, une tête d'extrusion avec un passage réservé pour l'insert, si ce dernier doit être noyé dans le profil extrudé, cette tête d'extrusion étant constituée d'une fourrure ou enveloppe tronconique logeant, de son entrée à sa sortie, un diffuseur tronconique nervuré radialement extérieurement, dans lequel chaque rainure entre deux nervures radiales correspond à un orifice de l'enceinte d'extrusion, un noyau tronconique nervuré et rainuré radialement extérieurement de manière que ses nervures et rainures correspondent à celles du diffuseur, une filière tronconique évidée intérieurement de manière conique en correspondance avec la conicité des nervures et rainures radiales du noyau, cette filière comportant, évidemment, un passage découpé à la forme du profilé désiré.

De manière plus spécifique et selon l'invention, les vis boudineuses sont incorporées dans un même bloc et logées dans des alésages parallèles entre eux et juxtaposés, ce bloc étant pourvu de canalisations internes, environnant ces vis à la manière d'un radiateur, dans lesquelles circulent l'eau et la vapeur provenant des moteurs hydrauliques de mise en rotation de ces vis.

Par ailleurs, la tête de liaison fait corps avec le bloc des boudineuses et loge un noyau de forme tronconique alésé axialement pour fournir le passage de l'insert et pourvu de rainures extérieures de forme sensiblement hélicoïdale, débouchant par des orifices annulaires segmentaires contre l'anneau distributeur, en nombre égal à celui des vis et prenant naissance, chacune, au droit de l'orifice de sortie d'une boudineuse. A noter que ce noyau tronconique est fixe, comporte une embase dans laquelle sont pratiqués les orifices annulaires, en sortie des rainures extérieures, suivant des diamètres différents pour éviter toute liaison entre eux, présente un sommet fileté pour le vissage de son écrou de fixation dans le bloc et est positionné normal aux boudineuses en lignes.

D'autre part, l'anneau distributeur est sous forme d'une bague cylindrique, de même diamètre que celui de l'embase du noyau de la tête de liaison, alésée axialement par un orifice de passage d'insert en correspondance avec celui de ce noyau et pourvue, sur sa face adjacente à celui-ci, de rainures annulaires prévues aux mêmes diamètres que ceux des orifices annulaires segmentaires de la base de ce noyau, ces rainures annulaires étant munies de perforations biaises débouchant dans des orifices prévus dans la face opposée de cette bague en correspondance avec les orifices d'admission de l'enceinte à veines contrôlées. A noter que cette enceinte connue dans les techniques de l'extrusion est décrite, entre autres, dans le brevet EP-A-0 031 742 ainsi que dans le brevet US-A-4 347 050. Par ailleurs, les perforations biaises dans les rainures annulaires de l'anneau distributeur sont fraisées pour accepter des pointes d'obturation en fonction de rainures annulaires utilisées dans la répartition des matières extrudées, ces rainures étant elles-mêmes conçues pour recevoir des arrêtoirs de matière répartis suivant la délimitation des segments de rainures choisis pour l'alimentation des orifices d'admission de l'enceinte.

En ce qui la concerne et comme on l'a défini précédemment, la tête d'extrusion incorporant la filière et agencée à la sortie de cette enceinte est constituée d'une enveloppe tronconique incorporant un diffuseur tronconique nervuré et rainuré radialement, un noyau tronconique nervuré et rainuré également radialement en correspondance avec le diffuser et une filière évidée coniquement dans laquelle butent les nervures du noyau. L'enveloppe de forme tronconique est adaptée pour se loger dans le flasque de fixation de la tête d'extrusion et est alésée coniquement de manière convergente vers sa sortie pour maintenir l'empilage du diffuseur, du noyau et de la filière, ainsi qu'une bague obturatrice placée à l'arrière du diffuseur et ayant un alésage correspondant au cercle circonscrit des orifices de l'enceinte d'extrusion, la face arrière de cette bague se trouvant plaquée sur la face avant ou de sortie de cette enceinte.

Pour sa part, le diffuseur tronconique est constitué en un seul bloc où les nervures radiales, de forme extérieure tronconique à conicité convergente, ménagent entre elles des rainures dont le fond est à conicité divergente en direction de leur sortie, les fonds à l'entrée étant incurvés inférieurement au diamètre du cercle inscrit des orifices de sortie de l'enceinte d'extrusion à veines contrôlées et ces fonds, du côté sortie, correspondant au diamètre extérieur du noyau tronconique. A noter qu'une des nervures de ce diffuseur est plus épaisse que les autres et comporte un canal interne d'admission d'air.

Par ailleurs, ce noyau tronconique est constitué également en un seul bloc ou les nervures radiales et le fond des rainures est à conicité convergente vers leur sortie du côté de la filière, ce fond de chaque rainure étant arrondi pour qu'une seule génératrice touche le fond de la filière. En ce qui la concerne, le paroi de cette filière est évidée coniquement en correspondance avec la conicité des nervures radiales du noyau et est usinée coniquement à l'extérieur en parallèle avec son évidement. On doit noter que la paroi de cette filière est prévue de faible épaisseur, environ quatre millimètres, mais toutefois suffisante pour que les matières extrudées se reconstituent dans cette épaisseur. En outre, il est à souligner que, contrairement aux filières, connues actuellement, les matières extrudées ne butent pas à 90° sur les parois internes de la tête d'extrusion puisque toutes ces parois sont de forme conique, ce qui permet de diminuer la pression d'extrusion. De plus, on peut ainsi faire varier la frontière de contact de ces matières en jouant sur le réglage de la pression dans les extrudeuses.

Par ailleurs, pour faciliter la réalisation de cette tête d'extrusion, l'inventeur a conçu un procédé de fabrication qui consiste à réaliser le diffuseur, le noyau et la filière sous forme de pièces de révolution pouvant être fabriquées en séries, donc peu onéreuses, seule l'enveloppe étant prévue comme une fourrure à ajuster aux diamètres extérieurs du diffuseur et de la filière par rapport à l'alésage du flasque de fixation de la tête d'extrusion. En particulier, pour usiner le nervurage et le rainurage du noyau, l'inventeur a conçu une électrode en cuivre moulé qui est adaptée pour s'appliquer sur l'ébauche du noyau alors sous forme d'une pièce de révolution.

D'autres particularités de la présente invention apparaîtront de la description suivante d'un mode de réalisation, donné à titre d'exemple non limitatif, d'une machine d'extrusion conforme à l'invention, conçue pour extruder simultanément trois matières de revêtement en continu d'un insert et représentée schématiquement dans les dessins ci-joints, dans lesquels:

- la figure 1 est une vue d'ensemble en coupe d'une machine d'extrusion conforme à l'invention;
- la figure 2 est une vue en perspective et en coupe de l'anneau distributeur;
- la figure 3 est une vue en coupe des perforations biaises de l'anneau distributeur de la figure 2;
- la figure 4 est une vue en perspective d'une pointe d'obturation d'une perforation biaise de l'anneau distributeur;
- la figure 5 est une vue en perspective d'un arrétoir de matière pour les rainures annulaires de l'anneau distributeur;
- la figure 6 est une vue de l'anneau distributeur du côté de sa face 8;
- la figure 7 est une vue de la face A de base du noyau tronconique de la tête de liaison, cette face étant adjacente à la face B de l'anneau distributeur;
- la figure 8 est une vue en coupe, de la tête d'extrusion;
- la figure 9 est une vue en élevation, partiellement en coupe, du diffuseur;
- la figure 10 est une vue avant, suivant la flèche F, du diffuseur représenté dans la figure 9;
- la figure 11 est une vue à plat en perspective du noyau de la tête d'extrusion;

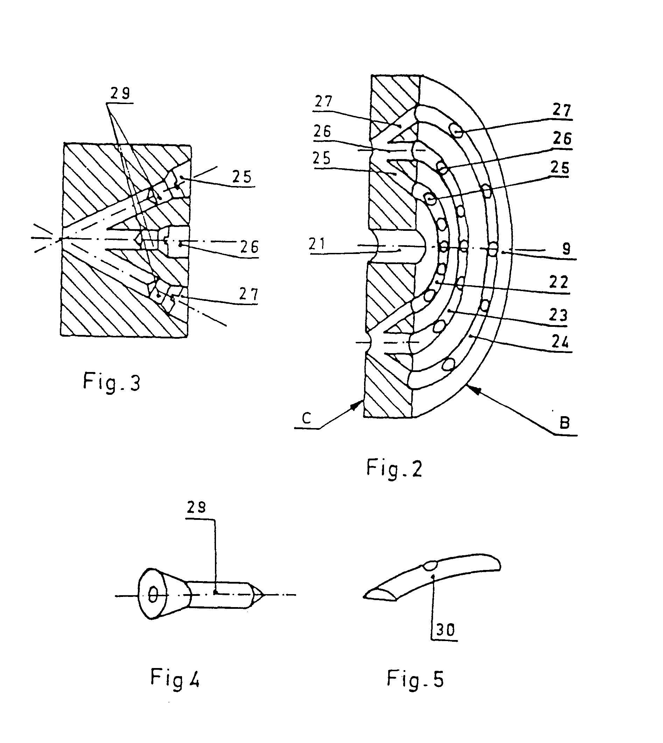

- la figure 2 est une vue en coupe de la filière proprement dite, avant que le passage du profilé et de l'insert ne soit réalisé:

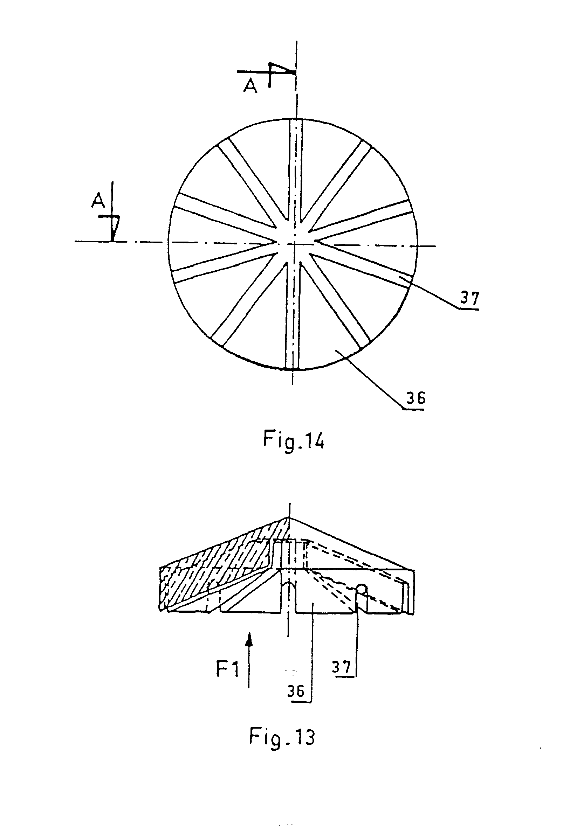

- la figure 13 est une vue en élevation, partiellement en coupe, de l'électrode servant à l'usinage du noyau de la tête d'extrusion;
- la figure 14 est une vue de dessous de l'électrode suivant la flèche F1.

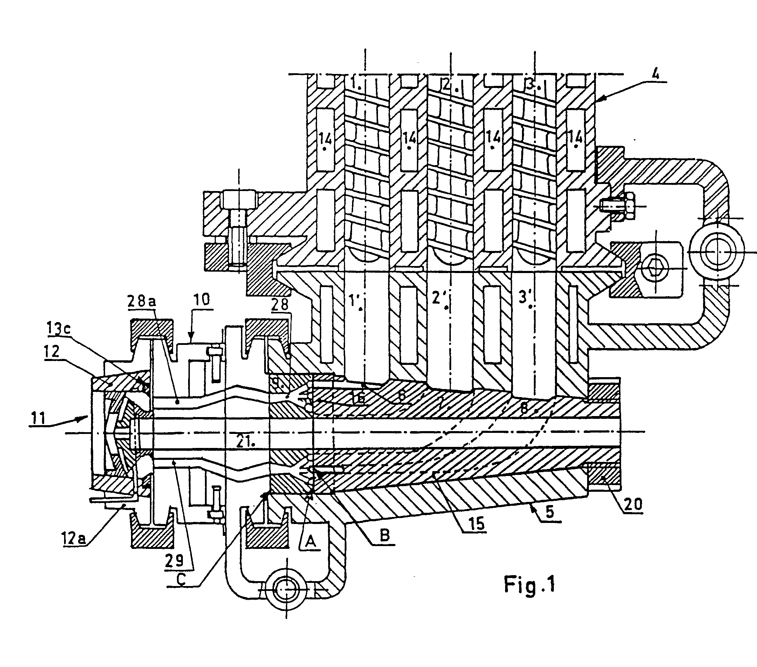

Comme représente dans la figure 1, la machine d'extrusion simultanée de trois matières représentée est constituée par trois vis boudineuses 1, 2, 3 incorporées dans un même bloc 4 et débouchant, par un orifice respectif 1', 2', 3', dans une tête de liaison 5 présentant trois canalisations 6, 7, 8, dont chacune est en correspondance avec un des orifices, et évidée axialement pour le passage d'un insert, cette tête de liaison alimentant, par l'intermédiaire d'un anneau distributeur perforé 9, un enceinte d'extrusion 10 à veines contrôlées portant à sa sortie une tête d'extrusion 11 constituée d'une fourrure ou enveloppe tronconique 12 logeant, de son entrée à sa sortie, un diffuseur tronconique 13 nervuré radialement extérieurement, dans lequel chaque rainure entre deux nervures radiales correspond à un orifice de l'enceinte d'extrusion 10, un noyau tronconique 13a nervuré et rainuré radialement extérieurement de manière que ses nervures et rainures correspondent à celles du diffuseur 13, une filière tronconique 13b évidée intérieurement de manière conique en correspondance avec la conicité des nervures et rainures radiales du noyau 13a, cette filière comportant évidemment un passage découpé à la forme du profilé désiré.

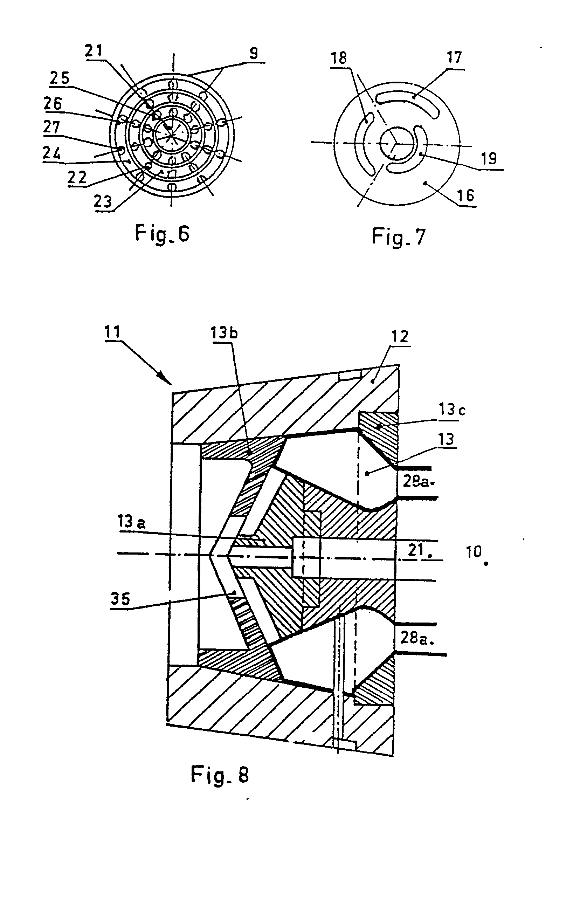

Les vis boudineuses 1, 2, 3 sont logées dans des alésages du bloc 4 parallèles entre eux et juxtaposés. Ce bloc 4 comporte des canalisations internes 14 adaptées pour circuler l'eau et la vapeur provenant des moteurs hydrauliques de mise en rotation des vis boudineuses. La tête de liaison 5 fait corps avec le bloc 4 et loge un noyau tronconique 15, alésé axialement et pourvu des trois canalisations extérieures 6, 7, 8 sous forme de rainures helicoïdales débouchant dans son embase 16 par des orifices annulaires segmentaires 17, 18, 19 (comme on peut le voir au mieux dans la figure 7) contre l'anneau distributeur 9, ces orifices annulaires étant distribués concentriquement suivant des diamètres différents et pour n'avoir aucune liaison entre eux. Ce noyau 15 comporte, en outre, à son sommet un filetage permettant le vissage d'un écrou 20 de fixation.

Comme représente en particulier dans les figures 2, 3 et 6, l'anneau distributeur 9 est sous forme d'une bague cylindrique de même diamètre que l'embase du noyau 15 et comportant un alésage central 21 de passage d'insert. Cet anneau distributeur 9 présente, sur sa face B adjacente à l'embase du noyau 15, des rainures annulaires 22, 23, 24, pratiquées en correspondance et aux mêmes diamètres que les orifices annulaires segmentaires 17, 18, 19. Ces rainures annulaires comportent, en outre, des perforations biaises 25, 26, 27 débouchant dans un orifice respectif commun 28 sur la face opposée C de l'anneau distributeur, ces orifices communs 28 étant situés en correspondance avec les orifices d'admission de l'enceinte 10. Les perforations biaises 25, 26, 27 sont, en outre, fraisées pour accepter de loger des pointes d'obturation 29 (figure 4) et les rainures annulaires 22, 23, 24 sont adaptées pour y insérer des arrêtoirs 30 (figure 5) de matière suivant la répartition désirée dans chaque rainure de chaque matière alimentée à l'enceinte en fonction du revêtement déterminé de l'insert.

On ne décrira pas ici la constitution de l'enceinte d'extrusion à veines contrôlées, puisque celle-ci est décrite en détails, entre autres, dans les brevets EP-A-003 174 et US-A-4 347 050 précités.

La tête d'extrusion 11, représentée dans son ensemble dans la figure 8, est constituée, comme indiqué précédemment, d'une enveloppe tronconique 12 incorporant un diffuseur tronconique 13 nervuré et rainuré radialement, un noyau tronconique 13a nervuré et rainuré également radialement en correspondance avec le diffuseur et une filière 13b évidée coniquement dans laquelle butent les nervures du noyau. L'enveloppe 12 de forme tronconique est adaptée pour se loger dans le flasque de fixation 12a de la tête d'extrusion et est alésée coniquement de manière convergente vers sa sortie pour maintenir l'empilage du diffuseur, du noyau et de la filière, ainsi qu'une bague obturatrice 13c placée à l'arrière du diffuseur et avant un alésage correspondant au cercle circonscrit des orifices 28a de l'enceinte d'extrusion, la face arrière de cette bague 13c se trouvant plaquée sur la face avant ou de sortie de cette enceinte.

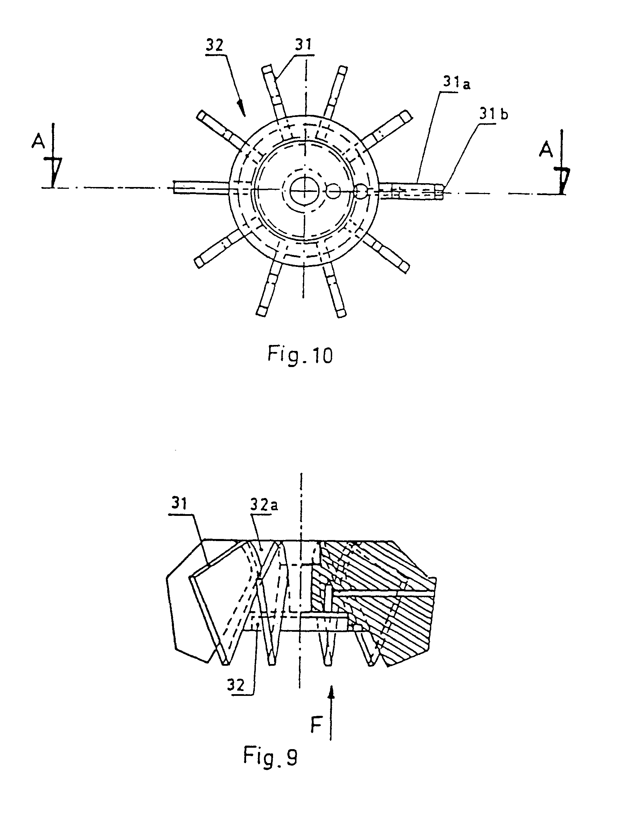

Pour sa part, le diffuseur tronconique (représenté dans les figures 9 et 10) est constitué en un seul bloc où les nervures radiales 31, de forme extérieure tronconique à conicité convergente, ménagent entre elles des rainures 32 dont le fond est à conicité divergente en direction de leur sortie, les fonds 32a à l'entrée étant incurvés inférieurement au diamètre du cercle inscrit des orifices de sortie 28a de l'enceinte d'extrusion à veines contrôlées et ces fonds, du côté sortie, correspondant au diamètre extérieur du noyau tronconique 13a. A noter qu'une des nervures 31a de ce diffuseur est plus épaisse que les autres et comporte un canal interne 31b d'admission d'air.

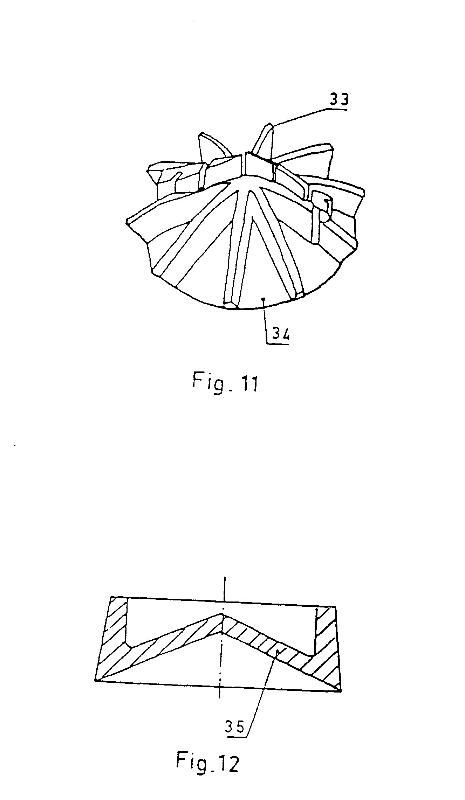

Par alleurs, ce noyau tronconique (représenté dans la figure 11) est constitué également en un seul bloc où les nervures radiales 33 et le fond des rainures 34 est à conicité convergente vers leur sortie du côté de la filière, ce fond de chaque rainure étant arrondi pour qu'une seule génératrice touche le fond de la filière. En ce qui la concerne, la paroi 35 de cette filière (représentée dans la figure 12) est évidée coniquement en correspondance avec la conicité des nervures radiales du noyau 13a et est usinée coniquement à l'extérieur en parallèle avec son évidement. On doit noter que la paroi 35 de cette filière est prévue de faible épaisseur, environ quatre millimètres, mais toutefois suffisante pour que les matières extrudées se reconstituent dans cette épaisseur.

Comme on la dit précédemment, l'inventeur utilise pour l'usinage du noyau 13a, pris à partir d'une pièce de révolution, une électrode de cuivre moulé représentée dans les figures 13 et 14. Cette électrode comporte des nervures radiales 36 destinées à creuser les rainures 34, en ménageant entre elles les nervures radiales 33 correspondant à ses rainures 37.

## Revendications

1. Machine d'extrusion simultanée de plusieurs matières, notamment adaptée pour le revêtement d'un insert profilé, et du genre de machine comportant plusieurs vis boudineuses (1, 2, 3) alimentées chacune à partir d'une trémie particulière et débouchant, par un orifice respectif (1', 2', 3'), dans une tête de liaison (5) présentant une canalisation particulière (6, 7, 8) pour chaque matière boudinée et alimentant, par l'intermédiaire d'un anneau distributeur (9), une enceinte d'extrusion (10) à veines contrôlées, connue dans la technique, cette machine étant caractérisée par le fait que la tête de liaison (5) est évidée axialement, de même que l'anneau distributeur (9), pour le passage d'un insert, et par le fait que l'enceinte d'extrusion (10) porte à sa sortie une tête d'extrusion (11), avec un passage (21) réservé pour l'insert, constituée d'une fourrure ou enveloppe tronconique (12) logeant, de son entrée à sa sortie, un diffuseur tronconique (13) nervuré radialement extérieurement, dans lequel chaque rainure entre deux nervures radiales correspond à un orifice de l'enceinte d'extrusion (10), un noyau tronconique (13a) nervuré et rainuré radialement extérieurement de manière que ses nervures et rainures correspondent à celles du diffuseur (13), une filière tronconique (13b) évidée intérieurement de manière conique, en correspondance avec la conicité des nervures et rainures radiales du noyau (13a), cette filière comportant, évidemment, un passage découpé à la forme du profilé désiré.

2. Machine d'extrusion selon la revendication 1, caractérisée par le fait que les vis boudineuses (1, 2, 3) sont incorporées dans un même bloc (4) et logées dans des alésages parallèles entre eux et juxtaposés, ce bloc (4) étant pourvu de canalisations internes (14) environnant ces vis à la manière d'un radiateur et circulant l'eau et la vapeur provenant des moteurs hydrauliques de mise en rotation de ces vis.

3. Machine d'extrusion selon la revendication 1, caractérisée par le fait que la tête de liaison (5) fait corps avec le bloc (4) des boudineuses et loge un noyau (15) de forme tronconique alésé axialement pour fournir le passage de l'insert et pourvu de rainures extérieures (6, 7, 8) de forme sensiblement hélicoïdale, débouchant par des orifices annulaires segmentaires (17, 18, 19) contre l'anneau distributeur (9), en nombre égal à celui des vis et prenant naissance chacune au droit de l'orifice de sortie d'une boudineuse.

4. Machine d'extrusion selon la revendication 3, caractérisée par le fait que le noyau tronconique (15) de la tête de liaison (5) est fixe, comporte une embase dans laquelle sont pratiqués les orifices annulaires (17, 18, 19), en sortie des rainures extérieures, suivant des diamètres différents pour éviter toute liaison entre eux, présente un sommet fileté pour le vissage de son écrou (20) de fixation dans le bloc (4) et est positionné normal aux boudineuses (1, 2, 3) en ligne.

5. Machine d'extrusion selon la revendication 1, caractérisée par le fait que l'anneau distributeur (9) est sous forme d'une bague cylindrique, de même diamètre que celui de l'embase du noyau (15) de la tête de liaison (5), alésée axialement par un orifice (21) de passage d'insert en correspondance avec celui de ce noyau et pourvue, sur sa face adjacente a celui-ci, de rainures annulaires (22, 23, 24) prévues aux mêmes diamètres que ceux des orifices annulaires segmentaires (17, 18, 19) de la base de ce noyau, ces rainures annulaires étant munies de perforations biaises (25, 26, 27) débouchant dans des orifices (28) prévus dans la face opposée de cette bague en correspondance avec les orifices d'admission de l'enceinte (10) à veines contrôlées.

6. Machine d'extrusion selon la revendication 5, caractérisée par le fait que les perforations biaises (25, 26, 27) dans les rainures annulaires de l'anneau distributeur sont fraisées pour accepter des pointes d'obturation (29) en fonction de rainures annulaires utilisées dans la répartition des matières extrudées, ces rainures étant elles-mêmes conçues pour recevoir des arrêtoirs (30) de matière répartis suivant la délimitation des segments de rainure choisis pour l'alimentation des orifices d'admission de l'enceinte (10) .

7. Machine d'extrusion selon la revendication 1, caractérisée par le fait que l'enveloppe (12) de la tête d'extrusion (11) est adaptée pour se loger dans le flasque de fixation (12a) de la tête d'extrusion et est alésée coniquement de manière convergente vers sa sortie pour maintenir l'empilage du diffuseur, du noyau et de la filière, ainsi qu'une bague obturatrice (13c) placée à l'arrière du diffuseur et ayant un alésage correspondant au cercle circonscrit des orifices (28a) de l'enceinte d'extrusion, la face arrière de cette bague (13c) se trouvant plaquée sur la face avant ou de sortie de cette enceinte.

8. Machine d'extrusion selon la revendication 1, caractérisée par le fait que le diffuseur tronconique est constitué en un seul bloc ou les nervures radiales (31), de forme extérieure tronconique à conicité convergente, ménagent entre elles des rainures (32) dont le fond est à conicité divergente en direction de leur sortie, les fonds (32a) à l'entrée étant incurvés inférieurement au diamètre du cercle inscrit des orifices de sortie (28a) de l'enceinte d'extrusion à veines contrôlées et des fonds, du côté sortie, correspondant au diamètre extérieur du noyau tronconique (13a).

9. Machine d'extrusion selon la revendication 1, caractérisée par le fait que le noyau tronconique est constitué également en un seul bloc où les nervures radiales (33) et le fond des rainures (34) est à conicité convergente vers leur sortie du côté de la filière, ce fond de chaque rainure étant arrondi pour qu'une seule génératrice touche le fond de la filière.

10. Machine d'extrusion selon la revendication 1, caractérisée par le fait que la paroi (35) de la filière (13b) est évidée coniquement en correspondance avec la conicité des nervures radiales du noyau (13a), usinée coniquement à l'extérieur en parallèle avec son évidement et prévue de faible épaisseur, environ quatre millimètres, mais toutefois suffisante pour que les matières extrudées se reconstituent dans cette épaisseur.

11. Procédé de fabrication d'une tête d'extrusion selon les revendications 7, 8, 9, 10, caractérisé par le fait qu'il consiste à usiner le diffuseur (13), le noyau (13a) et la filière (13b) à partir d'ébauches sous forme de pièces de révolution, en utilisant des électrodes en cuivre moulé conformées en contreforme de ces diffuseurs, noyau et filière.

**Patentansprüche**

1. Maschine zum gleichzeitigen Extrudieren von mehreren Stoffen, insbesondere zum Ummanteln eines profilierten Einsatzteils, und von der Maschinenart, die mehrere Extruderschnecken (1, 2, 3) enthält, die jeweils aus einem gesonderten Trichter gespeist werden und durch eine entsprechende Öffnung (1', 2', 3') in einen Verbindungskopf (5) münden, der einen gesonderten Kanal (6, 7, 8) für jeden extrudierten Stoff aufweist und mittels eines Verteilungsrings (9) einen in der Technik bekannten Extrusionsraum (10) mit gesteuerten Strängen speist, dadurch gekennzeichnet, daß der Verbindungskopf (5) ebenso wie der Verteilungsring (9) eine axiale Bohrung für den Durchgang eines Einsatzteils aufweist und daß der Extrusionsraum (10) auf seinem Ausgang einen mit einem für das Einsatzteil reservierten Durchgang (21) versehenen Extrusionskopf (11) trägt, der aus einem kegelstumpfförmigen Mantel oder Gehäuse (12) gebildet ist, in dem von seinem Eingang bis zu seinem Ausgang ein kegelstumpfförmiger Diffusor (13), der auf der Außenseite mit radialen Rippen versehen ist, wobei jede Rille zwischen zwei radialen Rippen einer Öffnung des Extrusionsraums (10) entspricht, ein kegelstumpfförmiger Kern (13a), der auf der Außenseite so mit radialen Rippen und Rillen versehen ist, daß seine Rippen und Rillen denen des Diffusors (13) entsprechen, ein kegelstumpfförmiges, innen in Übereinstimmung mit der Konizität der radialen Rippen und Rillen des Kerns (13a) konisch ausgebohrtes Spritzmundstück (13b) angeordnet sind, wobei das Spritzmundstück naturgemäß einen der Form des gewünschten Profils angepaßten Durchgang aufweist.

2. Maschine zum Extrudieren nach Anspruch 1, dadurch gekennzeichnet, daß die Extruderschnecken (1, 2, 3) in ein und demselben Block (4) eingebaut und in zueinander parallelen und nebeneinanderliegenden Bohrungen angeordnet sind, wobei der Block (4) mit inneren Kanälen (14) versehen ist, welche die Schnecken in der Art eines Radiators umgeben und in denen das Wasser und der Dampf zirkulieren, die aus den die Schnecken in Drehung versetzenden Hydraulikmotoren stammen.

3. Maschine zum Extrudieren nach Anspruch 1, dadurch gekennzeichnet, daß der Verbindungskopf (5) mit dem Block (4) der Strangpressen einstückig ausgebildet ist und einen kegelstumpfförmigen, mit einer axialen Bohrung für den Durchgang des Einsatzteils versehenen Kern (15) aufnimmt, der mit äußeren, im wesentlichen spiralförmigen Rillen (6, 7, 8) versehen ist, die durch segmentäre ringförmige Öffnungen (17, 18, 19) gegen den Verteilungsring (9) münden, von gleicher Anzahl sind wie die Schnecken und jeweils gerade an der Ausgangsöffnung einer Strangpresse ihren Anfang nehmen.

4. Maschine zum Extrudieren nach Anspruch 3, dadurch gekennzeichnet, daß der kegelstumpfförmige Kern (15) des Verbindungskopfs (5) stationär ist, eine Basis umfaßt, in der die ringförmigen Öffnungen (17, 18, 19) als Ausgang der äußeren Rillen entsprechend den verschiedenen Durchmessern angebracht sind, um jede Verbindung zwischen ihnen zu verhindern, eine Gewindespitze für die Aufnahme seiner Schraube (20) zur Befestigung im Block (4) aufweist und rechtwinklig zu den in Reihe angeordneten Strangpressen (1, 2, 3) positioniert ist.

5. Maschine zum Extrudieren nach Anspruch 1, dadurch gekennzeichnet, daß der Verteilungsring (9) die Form eines zylindrischen Ringes von gleichem Durchmesser wie die Basis des Kerns (15) des Verbindungskopfes (5) hat, axial durch eine Öffnung (21) für den Durchgang des Einsatzteils in Übereinstimmung mit derjenigen des Kerns ausgebohrt ist und auf seiner an diesen angrenzenden Fläche mit ringförmigen Rillen (22, 23, 24) versehen ist, die auf denselben Durchmessern wie die segmentären ringförmigen Öffnungen (17, 18, 19) der Basis des Kerns vorgesehen sind, wobei die ringförmigen Rillen mit schrägverlaufenden Perforationen (25, 26, 27) versehen sind, die in Öffnungen (28) münden, die in der dem Ring gegenüberliegenden Fläche in Übereinstimmung mit den Einströmöffnungen des Raums (10) mit gesteuerten Strängen vorgesehen sind.

6. Maschine zum Extrudieren nach Anspruch 5, dadurch gekennzeichnet, daß die schrägverlaufenden Perforationen (25, 26, 27) in den ringförmigen Rillen des Verteilungsringes gefräst sind, um Verschlußstifte (29) in Abhängigkeit von ringförmigen Rillen aufzunehmen, die für die Verteilung der extrudierten Stoffe verwendet werden, wobei die Rillen selbst konzipiert sind, um Stofführelemente (30) aufzunehmen, die gemäß der Begrenzung der für die Speisung der Einströmöffnungen des Raums (10) gewählten Rillensegmente verteilt sind.

7. Maschine zum Extrudieren nach Anspruch 1, dadurch gekennzeichnet, daß das Gehäuse (12) des Extrusionskopfes (11) sich im Befestigungsflansch (12a) des Extrusionskopfs lagern kann und konisch gegen seinen Ausgang hin konvergierend ausgebohrt ist, um die lagenweise Anordnung des Diffusors, des Kerns und des Spritzmundstücks aufrechtzuerhalten, ebenso wie ein Verschlußring (13c), der hinter dem Diffusor angeordnet ist und eine Bohrung aufweist, die dem Kreis entspricht, der von den Öffnungen (28a) des Extrusionsraums umschrieben wird, wobei die Rückseite des Ringes (13c) auf der Vorder- oder Ausgangsseite des Raums zur Anlage kommt.

8. Maschine zum Extrudieren nach Anspruch 1, dadurch gekennzeichnet, daß der kegelstumpfförmige Diffusor aus einem einzigen Block gebildet ist, wobei zwischen den radialen Rippen (31) von kegelstumpfförmiger Außenform mit konvergierender Konizität Rillen (32) ausgespart sind, deren Boden eine divergierende Konizität in Richtung ihres Ausgangs aufweist, und die Böden (32a) am Eingang niedriger als der Durchmesser des Kreises gekrümmt sind, der von den Ausgangsöffnungen (28a) des Extrusionsraums mit gesteuerten Strängen umschrieben wird, und die Böden ausgangsseitig dem Außendurchmesser des kegelstumpfförmigen Kerns (13a) entsprechen.

9. Maschine zum Extrudieren nach Anspruch 1, dadurch gekennzeichnet, daß der kegelstumpfförmige Kern ebenfalls aus einem einzigen Block gebildet ist, wobei die radialen Rippen (33) und der Boden der Rillen (34) zu ihrem spritzmundstückseitigen Ausgang von konvergierender Konizität sind und der Boden jeder Rille abgerundet ist, damit eine einzige Generatrix den Boden des Spritzmundstücks berührt.

10. Maschine zum Extrudieren nach Anspruch 1, dadurch gekennzeichnet, daß die Wand (35) des Spritzmundstücks (13b) in Übereinstimmung mit der Konizität der radialen Rippen des Kerns (13a) konisch ausgebohrt, auf der Außenseite parallel zu ihrer Ausbohrung konisch bearbeitet und in geringer Stärke, ca. 4 mm, jedoch gleichwohl ausreichend vorgesehen ist, damit die extrudierten Stoffe sich in dieser Stärke wiederherstellen.

11. Verfahren zur Herstellung eines Extrusionskopfes nach den Ansprüchen 7, 8, 9, 10, dadurch gekennzeichnet, daß es darin besteht, den Diffusor (13), den Kern (13a) und das Spritzmundstück (13b) aus Rohteilen in Form von Drehteilen zu bearbeiten, indem Elektroden aus geformtem Kupfer verwendet werden, die in Gegenform zum Diffusor, Kern und Spritzmundstück ausgestaltet sind.

**Claims**

1. Machine for the simultaneous extrusion of several materials, in particular adapted for coating a shaped insert, and of the type of machine comprising several extruder screws (1, 2, 3) each fed by one specific hopper and, via a respective orifice (1', 2', 3'), opening on to a connecting head (5) having one specific channel (6, 7, 8) for each of the extruded materials and, via a feeder ring (9), feeding an extrusion chamber (10) with controlled streams, known in the art, said machine being characterised in that the connecting head (5) and the feeder ring (9) are hollowed out axially for the passage of an insert, and that the extrusion chamber (10) has at its outlet side an extrusion head (11) having a passage (21) for the insert, consisting of a truncated bushing or envelope (12), which from its inlet side to its outlet side houses a truncated diffuser (13) provided on its exterior with radial ribs, whereby each groove between two radial ribs corresponds to an orifice of the extrusion chamber (10), a truncated core (13a) provided on its exterior with radial ribs and grooves in such a way that these ribs and grooves correspond to those of the diffuser (13), and a truncated die (13b) the interior of which is hollowed out in a tapered manner, in such a way that it corresponds to the taper of the radial ribs and grooves of the core (13a), said die obviously comprising a passage cut out to correspond to the shape of the desired profile.

2. Extrusion machine according to claim 1, characterised in that the extruder screws (1, 2, 3) are incorporated into one single unit (4) and are housed in parallel bores disposed side by side, this unit (4) being provided with inner channels (14) surrounding these screws like a heater and circulating the water and steam from the hydraulic motors for rotating said screws.

3. Extrusion machine according to claim 1, characterised in that the connecting head (5) is an integral part of the unit (4) comprising the extruders and houses a core (15) in the shape of a truncated cone with axial bores for the passage of the insert and provided with external grooves (6, 7, 8) of a substantially spiral shape, via annular segmental orifices (17, 18, 19), opening on to the feeder ring (9), equal in number to those of the screws and each originating to the right of the outlet orifice of an extruder.

4. Extrusion machine according to claim 3, characterised in that the truncated core (15) of the connecting head (5) is fixed, that it comprises a base in which the annular orifices (17, 18, 19) are formed, at the outlet side of the external grooves, and having different diameters in order to prevent any contact between them, that it has a threaded vertex for screwing its adjusting nut (20) into the unit (4), and that it is positioned normal to the line of extruders (1, 2, 3).

5. Extrusion machine according to claim 1, characterised in that the feeder ring (9) is in the form of a cylindrical collar with the same diameter as the base of the core (15) of the connecting head (5), provided with an axial bore in the form of an orifice (21) for the passage of an insert, corresponding to that of said core, and provided on the face adjacent to the latter with annular grooves (22, 23, 24) having the same diameter as the segmental annular orifices (17, 18, 19) of the base of this core, these annular grooves being provided with inclined holes (25, 26, 27) opening on to orifices (28) provided in the opposite face of this collar in such a way that they correspond to the inlet orifices of the extrusion chamber (10) with controlled streams.

6. Extrusion machine according to claim 5, characterised in that the inclined holes (25, 26, 27) in the annular grooves of the feeder ring are countersunk for receiving gate pins (29) in respect of annular grooves used in the distribution of the extruded materials, these grooves themselves being designed to receive material stopping devices (30) distributed along the boundaries of the groove segments selected to feed the inlet orifices of the chamber (10).

7. Extrusion machine according to claim 1, characterised in that the envelope (12) of the extrusion head (11) is adapted to be housed in the fixing flange (12a) of the extrusion head and has a bore with a convergent taper towards its outlet side in order to maintain the arrangement of the diffuser, core and die, as well as a sealing collar (13c) disposed behind the diffuser and having a bore corresponding to the circumscribed circle of the orifices (28a) of the extrusion chamber, the rear face of this collar (13c) lying against the front or outlet face of this chamber.

8. Extrusion machine according to claim 1, characterised in that the truncated diffuser consists of one single unit, whereby the radial ribs (31), externally in the shape of a truncated cone with a convergent taper, provide grooves (32) therebetween, the bases of which have a divergent taper towards their outlet side, the bases (32a) at the inlet side being curved inwards less than the diameter of the inscribed circle of the outlet orifices (28a) of the extrusion chamber with controlled streams, and at the outlet side these bases corresponding to the external diameter of the truncated core (13a).

9. Extrusion machine according to claim 1, characterised in that the truncated core also consists of one single unit, whereby the radial ribs (33) and the bases of the grooves (34) have a convergent taper towards their outlets at the die side, the base of each groove being rounded so that only one generatrix touches the base of the die.

10. Extrusion machine according to claim 1, characterised in that the wall (35) of the die (13b) is hollowed out in a tapered manner in such a way that it corresponds to the taper of the radial ribs of the core (13a), machined in a tapered manner on the exterior parallel to the hollow and having a small thickness, approximately four millimetres, but still sufficient for the extruded materials to reform within this thickness.

11. Process for the manufacture of an extrusion head according to claims 7, 8, 9 and 10, characterised in that it consists in machining the diffuser (13), the core (13a) and the die (13b) from blanks in the form of revolving workpieces, using moulded copper electrodes with the opposite shape to that of said diffuser, core and die.

Fig.1

Fig. 3

Fig. 2

Fig 4

Fig. 5

Fig. 6

Fig. 7

Fig. 8

Fig.10

Fig.9

33

34

Fig. 11

35

Fig. 12

A

A

37

36

Fig.14

F1

37

36

Fig.13